# EUROPEAN PATENT SPECIFICATION

(11) **EP 2 663 722 B1**
(45) Date of publication and mention of the grant of the patent: **23.10.2019**
(21) Application number: 11811660.7
(22) Date of filing: 01.08.2011
(51) Int. Cl.: F16H 19/04, G01L 5/00, E05F 15/635

(54) **A DRIVING SYSTEM FOR AN AUTOMATIC SLIDING DOOR**
ANTRIEBSSYSTEM FÜR EINE AUTOMATISCHE SCHIEBETÜR
SYSTÈME D'ENTRAÎNEMENT POUR UNE PORTE COULISSANTE AUTOMATIQUE

(30) Priority: 30.07.2010 US 847976
(43) Date of publication of application: 20.11.2013
(73) Proprietor: Autoslide Pty Ltd, Wetherill Park, NSW 2164 (AU)
(72) Inventor: HANCOCK, Mark, Steven, Wetherill Park, NSW 2164 (AU)
(74) Representative: Cummings, Sean Patrick
(86) International application number: PCT/AU2011/000964
(87) International publication number: WO 2012/012847

(56) References cited:
- WO-A2-2004/073153
- CN-Y- 201 206 388
- GB-A- 872 980
- JP-U- H 046 477
- JP-U- H 046 477
- US-A- 2 458 669
- US-A- 3 819 177
- US-A- 5 351 441
- US-A- 5 351 441
- US-A- 5 839 394
- US-A1- 2007 210 737
- US-B1- 6 918 210

## Description

### Technical Field

The present invention relates to a driving system for an automatic sliding door.

### Background Art

There is a general desire in the sliding door industry to provide a driving system which may be installed or retrofitted into any existing sliding doors or windows regardless of their style and geometry.

It is also generally desired to be able to avoid overloading of a driving system for automatic sliding doors, as it is rather expensive and time consuming to repair an overloaded system.

Document JPH046477 describes an example of a driving system for an automatic sliding door.

It is an object of the present invention to provide a driving system which may fulfil the above desire or which may at least provide a useful alternative.

### Summary of the Invention

According to a first aspect of the present invention, there is provided a driving system for an automatic sliding door, the driving system including:
a driver; and
a pinion with a shaft, the pinion being adapted to cause sliding movement of the door in a first or second direction when operatively connected to a corresponding rack associated with the door, characterised in that the driver has a hollow, in which the pinion is received, wherein the shaft of the pinion is secured in the hollow by a bolt, the pinion being selectively attachable to the driver in two positions:
   (a) a first position adopted to cause sliding movement of the door in the first direction in which the shaft is inserted into the hollow from a first side of the driver; and
   (b) a second position adopted to cause sliding movement of the door in the second direction in which the shaft is inserted into the hollow from a second side of the driver opposite to the first side of the driver.

Preferably, the driver includes a motor and a gearbox.

In a preferred embodiment, the rack is adapted to be connected to the upper portion of the panel or the top rail of the glass pane via a connector. This is most suitable for a patio door with a glass pane framed by a standard sized top rail and for a cavity door having a carriage which hangs off a runner attached to the guard. The connector is preferred to be a channel adapted to span a gap between the door and the driver. The channel may generally be L-shaped in cross section. Optionally, the channel also has an open-ended elongate cavity.

The driving system may include one or more caps adapted to fit onto one or more ends of the channel. Preferably, the each cap includes at least one hole for receiving a fixing means such as a screw.

Alternatively, in the case of patio door having a frame with a short top rail, the rack may be affixed to the side stiles or one or more grab stiles which extend from the side stiles.

Preferably, the second direction is a reverse of the first direction.

In a preferred embodiment, the driving system includes a member adapted to complementarily fit onto the connector. The member is preferred to be a concealer adapted to bridge a gap between a lower end of the driver and the door.

It is preferred that the driver is operatively connected to a coding device. Preferably, the coding device is remotely controllable. The coding device is preferred to be capable of causing the sliding door to operate in any selected one of four modes. The first (automatic) mode may involve the sliding door operating in response to one or more sensors located internally and/or externally of the door opening. The second (lock) mode may involve locking the sliding door in a closed position by way of an internal locking mechanism. The internal locking mechanism may form an integral part of or be associated with the motor. Preferably the internal locking mechanism is remotely controllable. The third (hold open) mode may involve maintaining the sliding door in an open position. The fourth (pet) mode may involve enabling the coding device to respond to presence of a pet thereby causing the sliding door to operate in the one or more states.

Conveniently, the coding device is associated with another coding device connected to another movable object. This is most suitable for, for example, a patio door which is accompanied by a fly screen. Preferably, the coding devices are configured such that they are capable of being set to operate in a master and slave arrangement. As such, motions of the patio door and a complementary fly screen may be synchronised.

The coding device is adapted to respond to an activator including an infrared (IR) emitter for emitting an IR beam to an object and a sensor adapted to detect a reflected beam from the object. Preferably, the activator is movably connected to a holder adapted to be affixed to the door guard, a wall or ceiling. The holder is preferred to include a back plate and a pair of ratchet bars extending therefrom. Preferably the ratchet bars are curved with sloping teeth. In this embodiment, the emitting angle of the IR beam is dictated by the orientation of the activator thereby defining an area of operation. The movement of the activator is preferably coordinated with the pair of ratchet bars. The activator may be locked at a desired position by a selected pair of sloping teeth provided on the ratchet bars.

According to another aspect of the invention there is provided an automatic sliding door comprising a driving system as described above. The door is made of a panel having an upper portion or glass pane framed by a top rail and two side stiles. Preferably, the door is made of a panel or glass pane framed by a top rail and two side stiles. An upper portion of the panel or the top rail of the glass pane is preferred to be held in place by a guard. The guard is typically attached to a ceiling.

### Brief Description of the Drawings

In order to achieve a better understanding of the nature of the present invention, non-limiting preferred embodiments of the invention will now be described, by way of example only, with reference to the accompanying drawings, in which:
Figure 1 is a side elevation of a driving system in accordance with one preferred embodiment of the present invention, installed in such a way that the door is movable in one direction;
Figure 2 is a side elevation of the driving system of Figure 1 installed in such a way that the door is movable in an opposite direction;
Figure 3 is a partially exploded perspective view of an embodiment of the driving system of the invention, showing the driver and pinion arranged in one position;
Figure 4 is a partially exploded perspective view of the driving system of Figure 3, showing driver and pinion arranged in another position;
Figure 5 is a cross sectional view of the driving system of Figure 3 or 4 mounted on a patio door with a short top rail;
Figure 6 is a cross sectional view of the driving system of Figure 3 or 4 mounted on a patio door with a tall top rail;
Figure 7 is a cross sectional view of the driving system of Figure 3 or 4 mounted on a cavity door;
Figure 8 is a perspective view of a cap and a corresponding packer;
Figure 9 is a perspective view of a patio door stile on which a rack is mounted for coordination with the driving system of Figure 3 or 4; and,
Figure 10 is a schematic diagram of two coding devices.

### Detailed Description

It will be appreciated that the driving system of the present invention is preferably designed specifically for use domestically. Although the driving system may include a more powerful motor to drive sliding doors in large scale commercial buildings, adaptations of other components may be required.

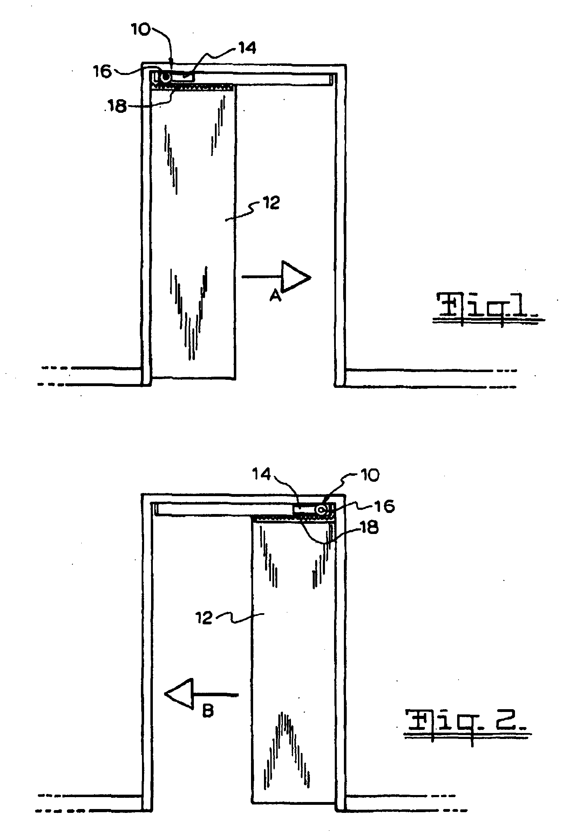

Referring to Figures 1 and 2, a driving system 10 for an automatic sliding door 12 includes a driver 14 and a pinion 16. The pinion 16 in combination with a corresponding rack 18 can cause sliding movement of the door 12 in a first (closing) direction indicated by A (Figure 1) or a second (reverse) direction indicated by B (Figure 2) when operatively connected to the corresponding rack 18 associated with the door 12. In each case, the closing direction may be reversed to cause the door 12 to open. The driver 14 includes a motor and a gearbox which are not shown.

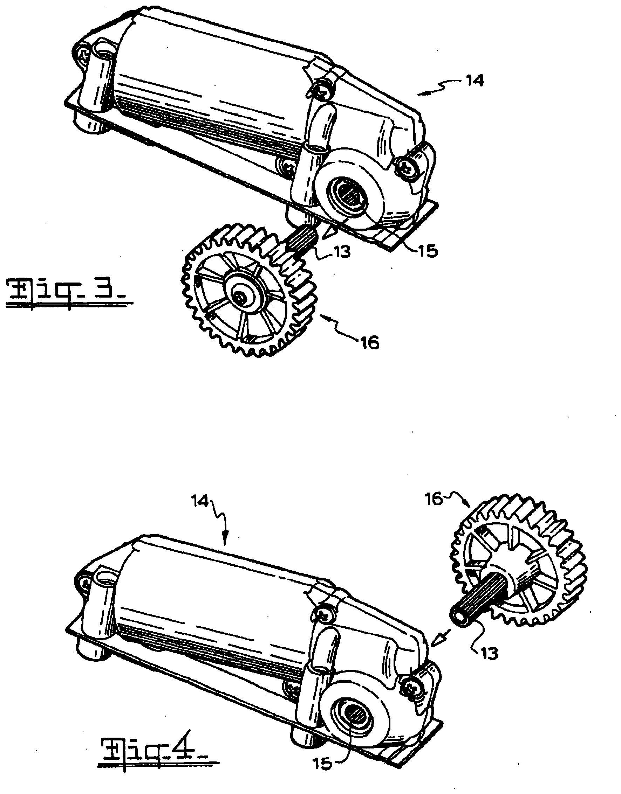

As best shown in Figures 3 and 4, the pinion 12 is selectively attachable to the driver 14 in two positions. The first position as illustrated in Figure 3 is adopted to cause sliding movement of the door 12 in the first direction A. By contrast, the second position shown in Figure 4 is adopted to cause sliding movement of the panel in the second direction B.

The pinion 16 has a shaft 13 which is received in a hollow 15 provided in the driver 14. A bolt (not shown) is provided to secure the shaft 13 of the pinion 16 in place within the hollow 15.

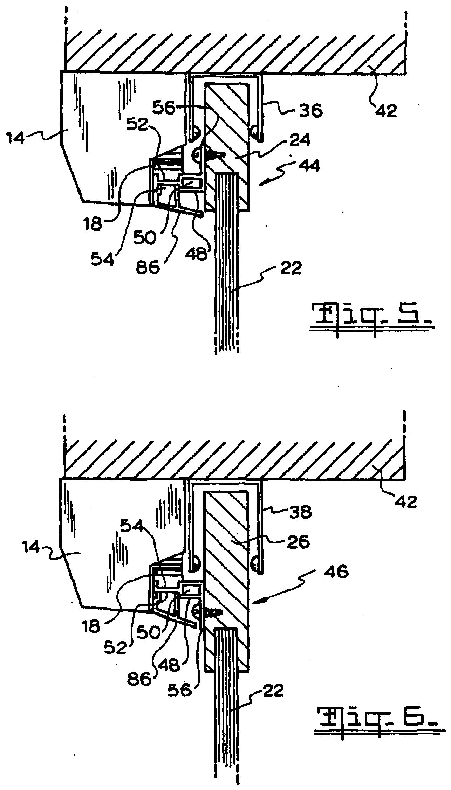

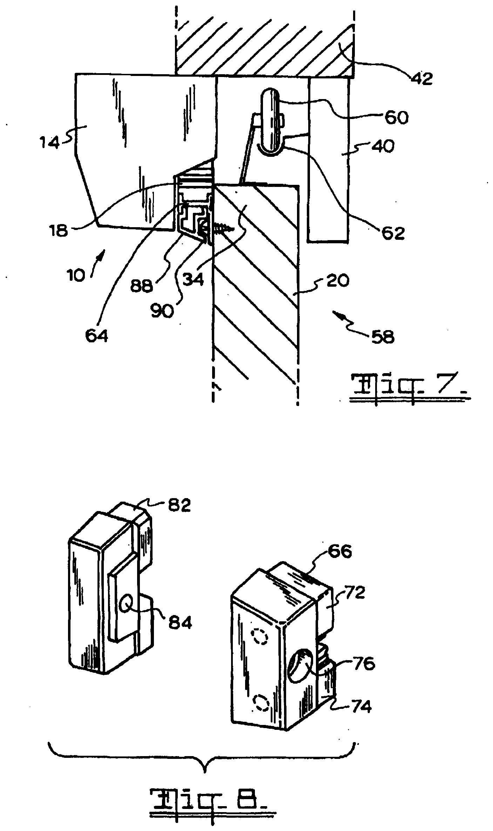

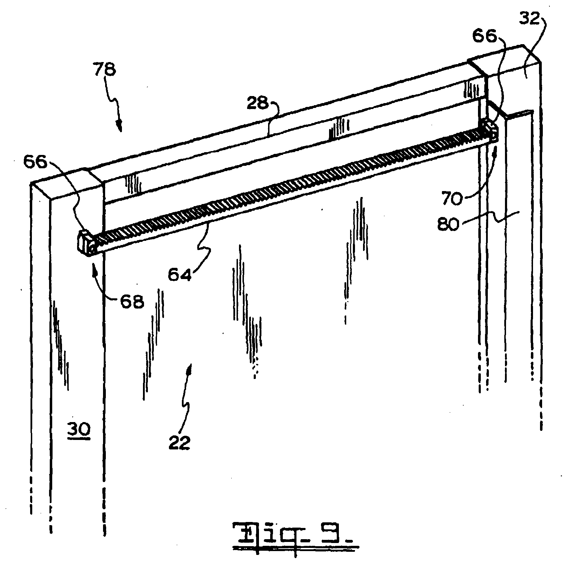

Turning to Figures 5 to 7 and 9, the door 12 in different embodiments may be made of a panel 20 or glass pane 22 framed by a top rail 24 (Fig 5), 26 (Fig 6) or 28 (Fig 9) and two side stiles 30 and 32 (Figure 9). An upper portion 34 of the panel (Figure 7) or the top rail 24, 26 or 28 of the glass pane 22 (Figures 5, 6 and 9) is held in place by a guard 36, 38 or 40, respectively. The guard 36, 38 or 40 is attached to a ceiling 42.

Referring to Figures 5 and 6, patio doors 44 and 46 both include a glass pane 22 partially framed by the top rail 24 and 26, respectively. In both embodiments, the rack 18 is connected to the top rail 24 or 26 of the glass pane 22 via a connector. The connector is in the form of a channel 48 having a generally L-shaped cross section. The channel 48 spans a gap between the patio door 44, 46 and the driver 14. The channel 48 also has an open-ended elongate cavity 50 and two grooves 52 and 54. It can be observed that the top rail 24 of patio door 44 (Figure 5) is shorter than that 26 of patio door 46. For this reason, the channel 48 is disposed with its vertical wall 56 facing up when the top rail 24 is short (Figure 5) and turned upside-down when the top rail 24 is tall (Figure 6). The channel 48 shown in Figures 5 and 6 are most suitable for the patio doors 44 and 46, each having a glass pane 22 framed by a standard sized top rail.

Turning to Figure 7, the driving system 10 is connected to a cavity door 58 which consists of panel 20. In this embodiment, the rack 18 is connected to the upper portion 34 of the panel 20 via a connector in the form of a channel 64, except that this channel 64 does not have the open-ended cavity 50 present in Figures 5 and 6. The cavity door 58 is supported by a carriage 60 which hangs off a runner 62 attached to the guard 40.

As shown in Figure 8 and 9, a cap 66 is provided to fit onto each of the ends 68 and 70 of the channel 64. The cap 66 has protrusions 72 and 74 for engaging the groove 52, 54 (Figures 5 and 6) of the channel 64. It will be appreciated that the cap 66 can also be used to fit onto the ends of channel 48 (Figures 5 and 6). As best shown in Figure 8, the cap 66 has a hole 76 for receiving a fixing means such as a screw (not shown). The cap 66 is configured such that fixing can be effected either at right angle or parallel to the face of the glass pane 22.

Referring to Figures 8 and 9, another embodiment of a patio door 78 has a frame with a very short top rail 28. In this case, the rack 64 has one end affixed to side stile 30 and the other end affixed to a grab stile 80 which extends from the side stile 32. A packer 82 (Figure 8) is provided between the cap 66 and the stile 30. The packer 82 also has a hole 84 for receiving the screw. The packer 82 is configured to couple snugly with cap 66 for securing the rack 64 to the stile 30.

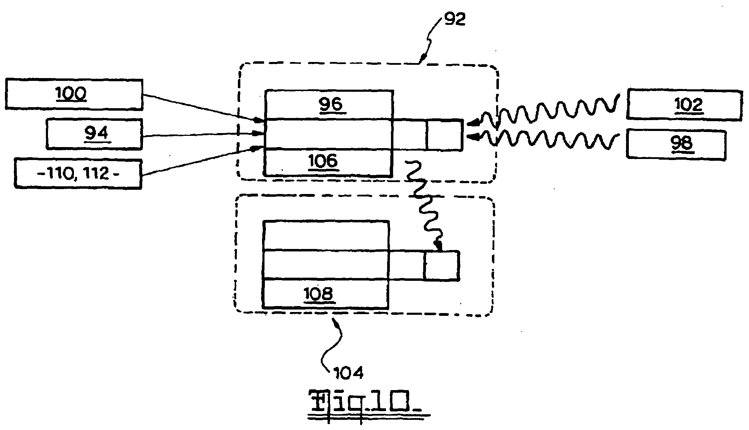

Referring to Figure 10, the driver 14 is operatively connected to a remotely controllable coding device 92. The coding device 92 is capable of causing the door 12 to operate in one of four modes. The first (automatic) mode involves the sliding door operating in response to one or more sensors located internally and/or externally of the door opening. The second (lock) mode involves locking the door 12 in a closed position by way of an internal locking mechanism. It is envisaged that the internal locking mechanism may form an integral part or be associated with the motor. The locking mechanism is controllable remotely by the remote control unit. The third (hold open) mode involves maintaining the door 12 in an open position. The fourth (pet) mode involves enabling the coding device to respond to presence of a pet thereby causing the sliding door 12 to operate in the one or more states. In this event, the coding device may be programmed to associate with a sensor 94 thereby being responsive to a heat radiating object approaching or within a range detectable by the sensor 94. The coding device 92 has a mode selector switch 96 which may be switched on or off either manually or by a remote control device 98.

It is contemplated that the sensor 94 is capable of detecting or responding to a heat radiating object which is in motion or idling or stationery. This is advantageous as, for instance, a pet may stand still at the entrance to an area. The range is defined by one or more beams emitted from the sensor 94 covering a selected area. Also, it is contemplated that other types of sensors such as floor pressure sensors 100, active IR detectors and motion sensors 102 may be associated with the coding device 92.

The driving system 10 is designed so that it can be retro-fitted onto an existing sliding door and transferred easily onto a fly screen, for example, for summer, and then subsequently transferred back to the original door as desired.

Furthermore, as shown in Figure 10, the coding device 92 can be associated with another coding device 104 connected to another movable object. This is most suitable for, for example, a patio door which is accompanied by a fly screen. Both of the coding devices 92, 104 are configured such that they are capable of being set to operate in a master and slave arrangement. As such, motions of the patio door 12 and a complementary fly screen (not shown) may be synchronised. The master and slave arrangement can be activated and deactivated manually by using the respective switches 106 and 108, or electronically by using the remote control device 98. In operation, a one way communication channel is established between the emitter in the master and receiver in the slave for the transmission of commands.

It should be appreciated that in order to ensure that the door operation remains in sync, all sensors and remote controls used to trigger the door and fly screen are associated either by wireless communication or hard-wired interface with the master coding device 92 and the 'open' and 'close' commands are all controlled by the master.

Now that several preferred embodiments of the present invention have been described in some detail, it will be apparent to those skilled in the art that the driving system and the indicating device may offer at least the following advantages:
1. it is simple and easy to install and apply;
2. it can be installated into many sliding doors regardless of their style and sliding direction;
3. it can enable synchronised opening and closing of a patio door and flyscreen;
4. it can allow easy selection of detection areas;
5. the indicating device may prevent overloading or improper selection of a driving system.

Those skilled in the art will appreciate that the invention described herein is susceptible to variations and modifications other than those specifically described. All such variations and modifications are to be considered within the scope of the claims.

## Claims

1. A driving system (10) for an automatic sliding door (12),
the driving system (10) including:
a driver (14); and,
a pinion (16) with a shaft (13), the pinion (16) being adapted to cause sliding movement of the door (12) in a first or second direction (A, B) when operatively connected to a corresponding rack (18) associated with the door (12), **characterised in that** the driver (14) has a hollow (15), in which the pinion (16) is received, wherein the shaft (13) of the pinion (16) is secured in the hollow (15) by a bolt, the pinion (16) being selectively attachable to the driver (14) in two positions:
(a) a first position adopted to cause sliding movement of the door (12) in the first direction (A) in which the shaft (13) is inserted into the hollow (15) from a first side of the driver (14); and,
(b) a second position adopted to cause sliding movement of the door (12) in the second direction (B) in which the shaft (13) is inserted into the hollow (15) from a second side of the driver (14) opposite to the first side of the driver (14).

2. The driving system (10) of claim 1, wherein the driver (14) includes a motor and a gearbox.

3. The driving system (10) of claim 1 or claim 2, the driving system (10) further comprising a connector, and wherein the rack (18) is adapted to be connected to the upper portion of a door panel (20) or a top rail (24, 26, 28) of a glass pane (22) via the connector.

4. The driving system (10) of claim 3, wherein the connector is a channel (48, 64) adapted to span a gap between the door (44, 46) and the driver (14), wherein the channel (48) is L-shaped in cross section having an open-ended elongate cavity (50).

5. The driving system (10) of claim 4, which includes one or more caps (66) adapted to fit onto one or more ends (68, 70) of the channel (64).

6. The driving system (10) of claim 3, which includes a member adapted to complementarily fit onto the connector, wherein the member adapted to bridge a gap between a lower end of the driver (14) and the door (12).

7. The driving system (10) of any previous claim, wherein the driver (14) is operatively connected to a remotely controllable coding device (92).

8. The driving system (10) of claim 7, wherein the coding device (92) is capable of causing the sliding door (12) to operate in any selected one of the following four modes: a first mode wherein the sliding door (12) is adapted to operate in response to one or more first sensors; a second mode wherein the sliding door (12) is adapted to move to a closed position; a third mode wherein the sliding door (12) is adapted to be maintained in an open position; and a fourth mode wherein the coding device is adapted to respond to presence of an object detectable by a second sensor (94) thereby causing the sliding door (12) to operate in the one or more of the first, second and third mode.

9. The driving system (10) of claim 7, wherein the coding device (92) is associated with another coding device (104) connected to another movable object.

10. The driving system (10) of claim 9, wherein the coding devices (92, 104) are configured such that they are capable of being set to operate in a master and slave arrangement for effecting synchronised movement of the sliding door (12) and the other movable object.

11. An automatic sliding door (12) comprising the driving system (10) of claim 1, wherein the door (12) is made of a panel (20) having an upper portion (34) or glass pane (22) framed by a top rail (24, 26, 28) and two side stiles (30, 32).

## Patentansprüche

1. Antriebssystem (10) für eine automatische Schiebetür (12), wobei das Antriebssystem (10) Folgendes beinhaltet:
einen Trieb (14); und
ein Ritzel (16) mit einer Welle (13), wobei das Ritzel (16) angepasst ist, um eine Schiebebewegung der Tür (12) in eine erste oder eine zweite Richtung (A, B) zu bewirken, wenn es mit einer entsprechenden Zahnstange (18) wirkverbunden ist, die der Tür (12) zugeordnet ist, **dadurch gekennzeichnet, dass** der Trieb (14) eine Vertiefung (15) aufweist, in der das Ritzel (16) aufgenommen ist, wobei die Welle (13) des Ritzels (16) in der Vertiefung (15) durch einen Bolzen gesichert ist, wobei das Ritzel (16) wahlweise in zwei Positionen an dem Trieb (14) angebracht werden kann:
(a) in einer ersten Position, die eingenommen wird, um eine Schiebebewegung der Tür (12) in die erste Richtung (A) zu bewirken, in der die Welle (13) von einer ersten Seite des Triebs (14) in die Vertiefung (15) eingeführt wird; und
(b) in einer zweiten Position, die eingenommen wird, um eine Schiebebewegung der Tür (12) in die zweite Richtung (B) zu bewirken, in der die Welle (13) von einer zweiten Seite des Triebs (14) gegenüber der ersten Seite des Triebs (14) in die Vertiefung (15) eingeführt wird.

2. Antriebssystem (10) nach Anspruch 1, wobei der Trieb (14) einen Motor und ein Getriebe beinhaltet.

3. Antriebssystem (10) nach Anspruch 1 oder 2, wobei das Antriebssystem (10) ferner ein Verbindungsstück umfasst, und wobei die Zahnstange (18) angepasst ist, um mit dem oberen Abschnitt einer Türplatte (20) oder einer oberen Schiene (24, 26, 28) einer Glasscheibe (22) über das Verbindungsstück verbunden zu werden.

4. Antriebssystem (10) nach Anspruch 3, wobei das Verbindungsstück ein Kanal (48, 64) ist, der angepasst ist, um einen Spalt zwischen der Tür (44, 46) und dem Trieb (14) zu überbrücken, wobei der Kanal (48) im Querschnitt L-förmig mit einem langgestreckten Hohlraum (50) mit offenem Ende ist.

5. Antriebssystem (10) nach Anspruch 4, das eine oder mehrere Kappen (66) beinhaltet, die angepasst sind, um auf ein oder mehrere Enden (68, 70) des Kanals (64) zu passen.

6. Antriebssystem (10) nach Anspruch 3, das ein Element beinhaltet, das angepasst ist, um komplementär auf das Verbindungsstück zu passen, wobei das Element angepasst ist, um einen Spalt zwischen einem unteren Ende des Triebs (14) und der Tür (12) zu überbrücken.

7. Antriebssystem (10) nach einem der vorhergehenden Ansprüche, wobei der Trieb (14) mit einer fernbedienbaren Codiervorrichtung (92) wirkverbunden ist.

8. Antriebssystem (10) nach Anspruch 7, wobei die Codiervorrichtung (92) bewirken kann, dass die Schiebetür (12) in einem beliebigen ausgewählten der folgenden vier Modi betrieben wird:
einem ersten Modus, in dem die Schiebetür (12) angepasst ist, als Reaktion auf einen oder mehrere erste Sensoren betrieben zu werden;
einem zweiten Modus, in dem die Schiebetür (12) angepasst ist, um sich in eine geschlossene Position zu bewegen;
einem dritten Modus, in dem die Schiebetür (12) angepasst ist, um in einer offenen Position gehalten zu werden; und
einem vierten Modus, in dem die Codiervorrichtung auf das Vorhandensein eines Objekts reagiert, das von einem zweiten Sensor (94) erfasst werden kann, wobei dadurch bewirkt wird, dass die Schiebetür (12) in dem ersten, dem zweiten und/oder dem dritten Modus betrieben wird.

9. Antriebssystem (10) nach Anspruch 7, wobei die Codiervorrichtung (92) einer anderen Codiervorrichtung (104) zugeordnet ist, die mit einem anderen beweglichen Objekt verbunden ist.

10. Antriebssystem (10) nach Anspruch 9, wobei die Codiervorrichtungen (92, 104) derart konfiguriert sind, dass sie eingestellt werden zu können, um in einer Master- und Slave-Anordnung betrieben zu werden, um eine synchronisierte Bewegung der Schiebetür (12) und des anderen beweglichen Objekts zu bewirken.

11. Automatische Schiebetür (12), die das Antriebssystem (10) nach Anspruch 1 umfasst, wobei die Tür (12) aus einer Platte (20) mit einem oberen Abschnitt (34) oder einer Glasscheibe (22), die durch eine obere Schiene (24, 26, 28) und zwei Seitenholme (30, 32) eingerahmt wird, hergestellt ist.

## Revendications

1. Un système d'entraînement (10) pour une porte coulissante automatique (12),
le système d'entraînement (10) comprenant :
un dispositif d'entraînement (14) ; et,
un pignon (16) doté d'un arbre (13), le pignon (16) étant adapté pour amener un mouvement de coulissement de la porte (12) dans une première ou une seconde direction (A, B) lorsqu'il est relié de manière opérationnelle à une crémaillère (18) correspondante associée à la porte (12), **caractérisé en ce que** le dispositif d'entraînement (14) a un creux (15) dans lequel est reçu le pignon (16), l'arbre (13) du pignon (16) étant fixé dans le creux (15) par un boulon, le pignon (16) pouvant être attaché sélectivement au dispositif d'entraînement (14) dans deux positions :
(a) une première position adoptée pour amener un mouvement de coulissement de la porte (12) dans la première direction (A) dans laquelle l'arbre (13) est inséré dans le creux (15) à partir d'un premier côté du dispositif d'entraînement (14) ; et,
(b) une seconde position adoptée pour amener un mouvement de coulissement de la porte (12) dans la seconde direction (B) dans laquelle l'arbre (13) est inséré dans le creux (15) à partir d'un second côté du dispositif d'entraînement (14) opposé au premier côté du dispositif d'entraînement (14).

2. Système d'entraînement (10) selon la revendication 1, dans lequel le dispositif d'entraînement (14) comporte un moteur et une boîte de vitesses.

3. Système d'entraînement (10) selon la revendication 1 ou la revendication 2, le système d'entraînement (10) comprenant en outre un connecteur, et la crémaillère (18) étant adaptée pour être reliée à la partie supérieure d'un panneau de porte (20) ou une traverse supérieure (24, 26, 28) d'une vitre (22) par l'intermédiaire du connecteur.

4. Système d'entraînement (10) selon la revendication 3, dans lequel le connecteur est un canal (48, 64) adapté pour couvrir un espace entre la porte (44, 46) et le dispositif d'entraînement (14), dans lequel le canal (48) est en forme de L en coupe transversale ayant une cavité allongée ouverte à son extrémité (50).

5. Système d'entraînement (10) selon la revendication 4, qui comporte un ou plusieurs capuchons (66) adaptés pour s'emboîter sur une ou plusieurs extrémités (68, 70) du canal (64).

6. Système d'entraînement (10) selon la revendication 3, qui comporte un élément adapté pour s'emboîter de manière complémentaire sur le connecteur, l'élément étant adapté pour combler un espace entre une extrémité inférieure du dispositif d'entraînement (14) et la porte (12).

7. Système d'entraînement (10) selon l'une quelconque des revendications précédentes, dans lequel le dispositif d'entraînement (14) est relié de manière opérationnelle à un dispositif de codage pouvant être commandé à distance (92).

8. Système d'entraînement (10) selon la revendication 7, dans lequel le dispositif de codage (92) est apte à amener la porte coulissante (12) à fonctionner dans l'un quelconque des quatre modes sélectionnés parmi les suivants :
un premier mode dans lequel la porte coulissante (12) est adaptée pour fonctionner en réponse à un ou plusieurs premiers capteurs ;
un deuxième mode dans lequel la porte coulissante (12) est adaptée pour se déplacer vers une position fermée ;
un troisième mode dans lequel la porte coulissante (12) est adaptée pour être maintenue dans une position ouverte ; et
un quatrième mode dans lequel le dispositif de codage est adapté pour répondre à la présence d'un objet détectable par un second capteur (94), ce qui amène la porte coulissante (12) à fonctionner dans l'un ou plusieurs parmi le premier, deuxième et troisième mode.

9. Système d'entraînement (10) selon la revendication 7, dans lequel le dispositif de codage (92) est associé à un autre dispositif de codage (104) relié à un autre objet mobile.

10. Système d'entraînement (10) selon la revendication 9, dans lequel les dispositifs de codage (92, 104) sont conçus de manière à pouvoir être réglés pour fonctionner dans un agencement maître et esclave pour effectuer un mouvement synchronisé de la porte coulissante (12) et de l'autre objet mobile.

11. Porte automatique coulissante (12) comprenant le système d'entraînement (10) selon la revendication 1, dans lequel la porte (12) est constituée d'un panneau (20) ayant une partie supérieure (34) ou une vitre (22) encadrée par une traverse supérieure (24, 26, 28) et deux montants latéraux (30, 32).
